# EUROPEAN PATENT APPLICATION

(11) **EP 4 456 651 A1**
(43) Date of publication of application: **30.10.2024**
(21) Application number: 22909839.7
(22) Date of filing: 14.12.2022
(51) Int. Cl.: H04W 74/08

(54) **MESSAGE SENDING METHOD, MESSAGE RECEIVING METHOD, AND DEVICE**

(30) Priority: 23.12.2021 CN 202111609083
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: DONG, Jing, Beijing 100053 (CN); XIA, Liang, Beijing 100053 (CN); WANG, Qixing, Beijing 100053 (CN); LIU, Guangyi, Beijing 100053 (CN)
(74) Representative: Maiwald GmbH
(86) International application number: PCT/CN2022/138945
(87) International publication number: WO 2023/116525

(57) **Abstract**

Disclosed in the embodiments of the present disclosure are a message sending method, a message receiving method and a device. The message sending method comprises: sending first random access request information to a first access network device at a first random access resource, and sending second random access request information to the first access network device at a second random access resource; receiving first random access response information and second random access response information, which are sent by the first access network device or a second access network device, wherein the first random access response information is used for responding to the first random access request information, and the second random access response information is used for responding to the second random access request information; and sending a third message Msg3 of random access to the first access network device, wherein the Msg3 corresponds to the first random access response information and the second random access response information.

## Description

### CROSS REFERENCE TO RELATED APPLICATIONS

This application is based on and claims priority to Chinese patent application No. 202111609083.0, filed on December 23, 2021, the entire contents of which are incorporated herein by reference.

### TECHNICAL FIELD

The disclosure relates to the field of mobile communication technologies, in particular to a method for sending a message, a method for receiving a message and devices.

### BACKGROUND

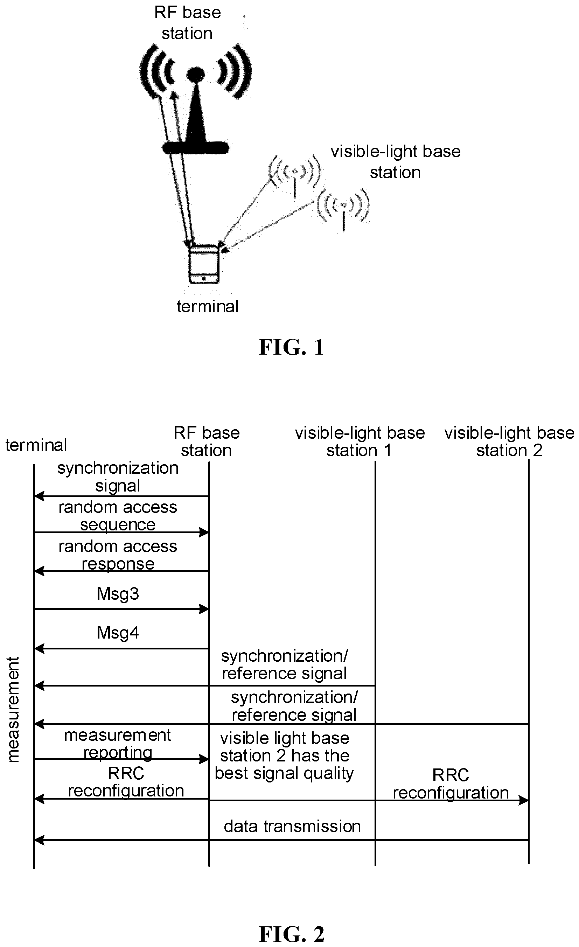

Indoor Visible Light Communication (VLC) transmits information by flashing Light Emitting Diode (LED) lights at high speed, which uses free space as a transmission channel. It is a new type of high-speed and environmentally friendly indoor access network technology. Since the light emitted by an LED light source has a certain directionality, its own coverage range is small. When a user moves to an area that is not covered by visible light communication, the service may be interrupted. In addition, compared with the penetration of wireless communications, VLC is easily affected by obstructions, thereby causing interruption of communication link. Meanwhile, considering that visible light uplink is difficult to implement in practical applications, VLC is generally combined with other wireless access methods for heterogeneous networking. Taking radio frequency as an example, it is assumed that in the heterogeneous networking of visible light communication, visible light has only downlink and no uplink. However, the radio frequency link has both uplink and downlink, as illustrated in FIG. 1.

In the existing initial access process for a terminal of the heterogeneous networking of visible light, when the terminal wants to access two base stations at the same time, the terminal will send two first messages (Msg1) of the random access on two random access channel occasions (RACH Occasion, RO). The access network device may send second messages (Msg2) of the random access for these two Msg1 respectively. The terminal continues to send two third messages (Msg3) of the random access, receives two fourth messages (Msg4) of the random access subsequently, and then send Hybrid Automatic Repeat reQuest Acknowledgement (HARQ-ACK) feedbacks for these two Msg4 respectively, which may cause a serious waste of resources.

### SUMMARY

At least one embodiment of the disclosure provides a method for sending a message, a method for receiving a message and devices, to reduce resource waste in a random access process and improve access efficiency.

Embodiments of the disclosure are realized in the following ways.

According to a first aspect of embodiments of the disclosure, a method for sending a message, performed by a terminal, is provided. The method includes:
sending first random access request information to a first access network device on a first random access resource, and sending second random access request information to the first access network device on a second random access resource;
receiving first random access response information and second random access response information sent by the first access network device or a second access network device, in which the first random access response information is used to respond to the first random access request information, and the second random access response information is used to respond to the second random access request information; and
sending one third message (Msg3) of random access to the first access network device, in which the Msg3 corresponds to the first random access response information and the second random access response information.

In some optional embodiments of the disclosure, the Msg3 is a first Msg3 or a second Msg3,
the first Msg3 is an Msg3 sent on a third time-domain resource, scrambled by a first Radio Network Temporary Identity (RNTI), and carrying a contention resolution identity and a second RNTI; the second Msg3 is an Msg3 sent on a fourth time-domain resource, scrambled by the second RNTI, and carrying a contention resolution identity and the first RNTI; the third time-domain resource and the first RNTI are indicated by the first random access response information, the third time-domain resource is a time-domain resource for sending the Msg3, the first RNTI is a Temporary Cell-RNTI (TC-RNTI); and the fourth time-domain resource and the second RNTI are indicated by the second random access response information, the fourth time-domain resource is a time-domain resource for sending the Msg3, and the second RNTI is a TC-RNTI.

In some optional embodiments of the disclosure, in an event that the first time-domain resource on which the terminal receives the first random access response information is not later than a second time-domain resource on which the terminal receives the second random access response information, sending one Msg3 of the random access to the first access network device includes:
in response to the third time-domain resource not being later than the fourth time-domain resource and a fourth offset being greater than or equal to a first threshold, sending the first Msg3 scrambled by the first RNTI on the third time-domain resource;
in response to the third time-domain resource not being later than the fourth time-domain resource and the fourth offset being less than the first threshold, sending the second Msg3 scrambled by the second RNTI on the fourth time-domain resource; and
in response to the third time-domain resource being later than the fourth time-domain resource, sending the second Msg3 scrambled by the second RNTI on the fourth time-domain resource;
in which the fourth offset is equal to a difference between a first offset and a third offset, the first offset is an offset between the first time-domain resource and the third time-domain resource, the third offset is an offset between the first time-domain resource and the second time-domain resource, and each offset is all greater than or equal to 0.

In some optional embodiments of the disclosure, the first threshold is a sum of a first time, a second time and a third time, the first time is a shortest processing time between a time when the terminal receives downlink data and a time when the terminal sends feedback information of a downlink time, the second time is a shortest processing time between a time when the terminal receives downlink control information and a time when the terminal sends uplink data scheduled by the downlink control information, and the third time is a data processing delay of a Media Access Control (MAC) layer of the terminal.

In some optional embodiments of the disclosure, after sending the first Msg3, the method further includes: receiving a first Msg4, scrambled by the first RNTI, sent by the first access network device or the second access network device; and
after sending the second Msg3, the method further includes: receiving a second Msg4, scrambled by the second RNTI, sent by the first access network device or the second access network device.

In some optional embodiments of the disclosure, after sending the first random access request information and the second random access request information, when the terminal receives only the first random access response information or the second random access response information, the method further includes:
in response to receiving only the first random access response information, sending a third Msg3 scrambled by the first RNTI on the third time-domain resource, in which the third Msg3 carries the contention resolution identity; and receiving a third Msg4, scrambled by the first RNTI, sent by the first access network device or the second access network device; or
in response to receiving only the second random access response information, sending a fourth Msg3 scrambled by the second RNTI on the fourth time-domain resource, in which the fourth Msg3 carries a contention resolution identity; and receiving a fourth Msg4, scrambled by the second RNTI, sent by the first access network device or the second access network device.

In some optional embodiments of the disclosure, after sending the first random access request information and the second random access request information, when the terminal does not receive the first random access response information and the second random access response information, the method further includes:
re-sending a first message (Msg1) of the random access on the first random access resource and the second random access resource.

According to a second aspect of embodiments of the disclosure, a method for sending a message, performed by a first access network device, is provided. The method includes:
receiving, on a first random access resource, first random access request information sent by a terminal, and receiving, on a second random access resource, second random access request information sent by the terminal;
sending first random access response information and second random access response information to the terminal, in which the first random access response information is used to respond to the first random access request information, and the second random access response information is used to respond to the second random access request information; and
receiving one Msg3 sent by the terminal, in which the Msg3 corresponds to the first random access response information and the second random access response information.

In some optional embodiments of the disclosure, the Msg3 is a first Msg3 or a second Msg3,
the first Msg3 is an Msg3, sent on a third time-domain resource, scrambled by a first RNTI, and carrying a contention resolution identity and a second RNTI; the second Msg3 is an Msg3 sent on a fourth time-domain resource, scrambled by the second RNTI, and carrying a contention resolution identity and the first RNTI; the third time-domain resource and the first RNTI are indicated by the first random access response information, the third time-domain resource is a time-domain resource for sending the Msg3, the first RNTI is a TC-RNTI; the fourth time-domain resource and the second RNTI are indicated by the second random access response information, the fourth time-domain resource is a time-domain resource for sending the Msg3, and the second RNTI is a TC-RNTI.

In some optional embodiments of the disclosure, sending the first random access response information and the second random access response information to the terminal includes:
sending the first random access response information and the second random access response information directly to the terminal; or
sending the first random access response information and the second random access response information to the terminal via a second access network device.

In some optional embodiments of the disclosure, after receiving one Msg3 sent by the terminal, the method further includes: sending one Msg4 to the terminal.

In some optional embodiments of the disclosure, sending one Msg4 to the terminal includes:
in response to the Msg3 being the first Msg3, sending a first Msg4 scrambled by the first RNTI to the terminal; or
in response to the Msg3 being the second Msg3, sending a second Msg4 scrambled by the second RNTI to the terminal.

In some optional embodiments of the disclosure, after sending the first random access response information and the second random access response information, the method further includes:
receiving a third Msg3, scrambled by the first RNTI, sent on the third time-domain resource by the terminal, in which the third Msg3 carries a contention resolution identity; and sending a third Msg4 scrambled by the first RNTI to the terminal; or
receiving a fourth Msg3, scrambled by the second RNTI, sent on the fourth time-domain resource by the terminal, in which the fourth Msg3 carries a contention resolution identity; and sending a fourth Msg4 scrambled by the second RNTI to the terminal.

According to a third aspect of embodiments of the disclosure, a terminal is provided. The terminal includes a transceiver and a processor.

The transceiver is configured to send first random access request information to a first access network device on a first random access resource, and send second random access request information to the first access network device on a second random access resource; receive first random access response information and second random access response information sent by the first access network device or a second access network device; in which the first random access response information is used to respond to the first random access request information, and the second random access response information is used to respond to the second random access request information.

The processor is configured to send one Msg3 to the first access network device, in which the Msg3 corresponds to the first random access response information and the second random access response information.

According to a fourth aspect of embodiments of the disclosure, a terminal is provided. The terminal includes a processor, a memory and a program stored on the memory and executable by the processor. When the program is executed by the processor, steps of the methods according to the first aspect are implemented.

According to a fifth aspect of embodiments of the disclosure, an access network device is provided. The access network device includes a transceiver and a processor.

The transceiver is configured to receive, on a first random access resource, first random access request information sent by a terminal, and receive, on a second random access resource, second random access request information sent by the terminal.

The processor is configured to send first random access response information and second random access response information to the terminal, in which the first random access response information is used to respond to the first random access request information, and the second random access response information is used to respond to the second random access request information; and receive one Msg3 sent by terminal, in which the Msg3 corresponds to the first random access response information and the second random access response information.

According to a sixth aspect of embodiments of the disclosure, an access network device is provide. The access network device includes a processor, a memory and a program stored on the memory and executable by the processor. When the program is executed by the processor, steps of the methods according to the second aspect are implemented.

According to a seventh aspect of embodiments of the disclosure, a computer-readable storage medium is provided. The computer-readable storage medium has a program stored thereon. When the program is executed by a processor, steps of the methods according to the first aspect or the second aspect are implemented.

Compared to the related art, with the method for sending a message, the method for receiving a message, and the related devices according to embodiments of the disclosure, when two random access response information are received, only one Msg3 needs to be fed back, such that the simultaneous access of the terminal to two access network devices is realized, which reduces the transmission resource overhead required for information transmission, reduces the processing resource overhead of the terminal for sending and processing messages, reduces the access delay, and improves the access efficiency.

### BRIEF DESCRIPTION OF THE DRAWINGS

Various additional advantages and benefits will become apparent to those skilled in the art after reading the following detailed description of optional implementations. The drawings are only for the purpose of illustrating preferred implementations and are not to be considered as limiting the disclosure. Throughout the drawings, the same reference symbols are used to represent the same components.
FIG. 1 is a schematic diagram illustrating an application scenario according to an embodiment of the disclosure.
FIG. 2 is a schematic diagram illustrating an initial access process of a heterogeneous networking of the visible light in the related art.
FIG. 3 is a schematic diagram illustrating an improved initial access process of the heterogeneous networking of the visible light.
FIG. 4 is a schematic diagram illustrating a process in which a terminal sends two third messages (Msg3) of random access.
FIG. 5 is a flowchart illustrating a method for sending a message according to an embodiment of the disclosure.
FIG. 6 is an example diagram of selecting a first Msg3 according to an embodiment of the disclosure.
FIG. 7 is an example diagram of selecting a second Msg3 according to an embodiment of the disclosure.
FIG. 8 is another example diagram of selecting the second Msg3 according to an embodiment of the disclosure.
FIG. 9 is a flowchart illustrating a method for receiving a message according to an embodiment of the disclosure.
FIG. 10 is a schematic diagram illustrating a terminal according to an embodiment of the disclosure.
FIG. 11 is a schematic diagram illustrating a terminal according to another embodiment of the disclosure.
FIG. 12 is a schematic diagram illustrating an access network device according to an embodiment of the disclosure.
FIG. 13 is a schematic diagram illustrating an access network device according to another embodiment of the disclosure.
FIG. 14 is a schematic diagram illustrating the terminal according to yet another embodiment of the disclosure.
FIG. 15 is a schematic diagram illustrating the access network device according to yet another embodiment of the disclosure.

### DETAILED DESCRIPTION

Embodiments of the disclosure will be described below in detail with reference to the accompanying drawings. Although embodiments of the disclosure are shown in the drawings, it is understandable that the disclosure may be implemented in various forms and should not be limited to embodiments set forth herein. Instead, these embodiments are provided to enable a more thorough understanding of the disclosure and to fully convey the scope of the disclosure to those skilled in the art.

The terms "first", "second", etc. in the specification and claims of the disclosure are used to distinguish similar objects and are not necessarily used to describe a particular order or sequence. It is understandable that data used with these terms are interchangeable under appropriate circumstances, such that embodiments of the disclosure described herein are capable of being implemented in sequences other than those illustrated or described herein. Moreover, the terms "comprises" and "has" and any variations thereof are intended to cover non-exclusive inclusions. For example, a process, method, system, product, or apparatus that includes a series of steps or units is not necessarily limited to those steps or units explicitly listed, but may include other steps or units not explicitly listed or inherent to such process, method, product, or apparatus. In the specification and claims, "and/or" means at least one of the connected objects.

The following description provides examples and is not intended to limit the scope, applicability, or configuration set forth in the claims. Changes may be made in the function and arrangement of elements discussed without departing from the spirit and scope of the disclosure. Various examples may omit, substitute, or add various procedures or components as appropriate. For instance, the methods described may be performed in an order different from that described, and various steps may be added, omitted, or combined. In addition, features described with reference to certain examples may be combined in other examples.

Taking the heterogeneous networking of visible light communication illustrated in FIG. 1 as an example, after the terminal is turned on, the terminal accesses to a Radio Frequency (RF) base station first through a series of processes such as synchronization and random access by means of the RF uplink and downlink. The terminal measures the quality of all synchronization signals or reference signals that may be received from visible-light base stations, and reports the quality to the RF base station by means of the RF uplink. The RF base station selects a visible-light base station having the best quality and add the selected visible-light base station through reconfiguration. Considering that there is no visible-light uplink in the system, the terminal communicates directly with the visible-light base stations without the need of performing uplink synchronization based on the random access process, which is illustrated in FIG. 2.

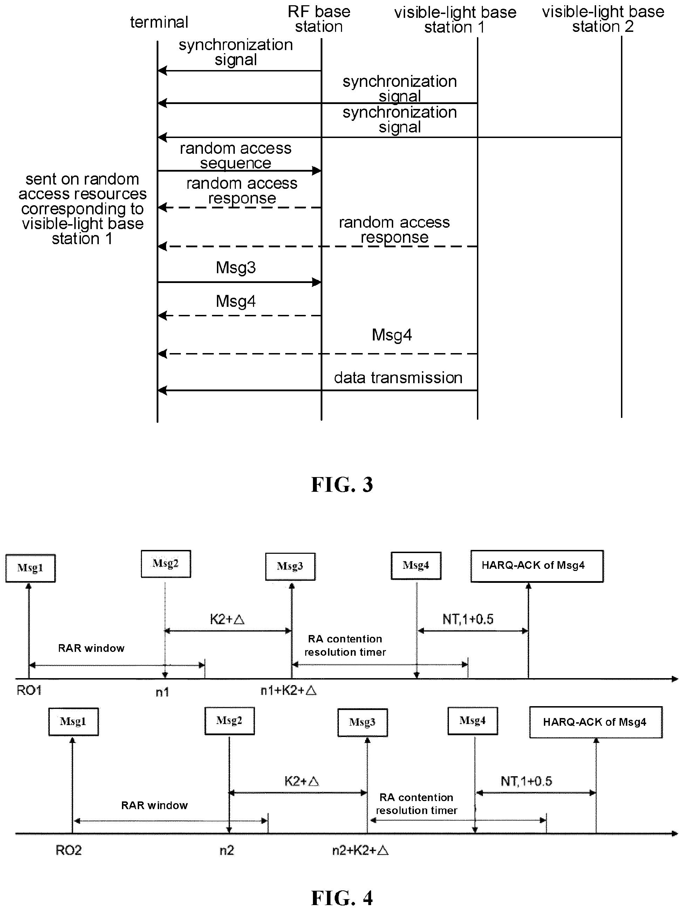

In the existing initial access process of the heterogeneous networking of the visible light, if the terminal wants to access the visible-light base station, the terminal needs to access the RF base station first and reports all the measured visible-light downlink quality to the RF base station, and then the RF base station adds a suitable visible-light base station for the terminal to communicate with, which is a rather long process. Considering that in an RF access phase, the terminal directly selects a visible-light downlink for access, this omits the measurement reporting process and the reconfiguration process performed by the RF base station, thereby reducing the initial access delay and improving the access process rate. The access process is illustrated in FIG. 3.

The random access channel design of the 5^{th} generation (5G) new radio (NR) has already supported the beam scanning transmission mode in the synchronization and broadcast channel phases. Each Synchronization Signal/Physical Broadcast Channel block (SS/PBCH block, SSB) may carry an additional SSB index for identifying a beam. Therefore, in the random access process, it is also necessary to consider the support for multi-beam operation mode, for example, introducing an association mapping relationship between random access resources and SSBs. The terminal sends a random access sequence only on a Physical Random Access Channel (PRACH) transmission occasion corresponding to a specific SSB, which realizes implicit reporting of downlink SSB beam selection, thereby reducing the beam scanning overhead in subsequent processes.

In the initial access process of the heterogeneous networking of the visible light, the terminal receives the SSBs sent by the RF downlink and the visible-light downlink. By establishing the mapping relation between the visible-light PRACH transmission resources, the visible-light SSBs and the RF SSBs, a corresponding random access channel occasion (RACH occasion, RO) may be selected to send a first message (Msg1) of the random access, so that the RF base station may identify the visible-light base stations that the terminal wants to access and also use the most appropriate uplink beam for receiving.

In the related art, after finishing the sending of the random access sequence Msg1, the terminal monitors downlink control information format 1_0 (DCI format 1_0) scrambled by a Random Access Radio Network Temporary Identity (RA-RNTI) within a Random Access Response (RAR) window (RA Response window), to receive a corresponding RAR. When the terminal has successfully received the DCI format 1-0 scrambled by the corresponding RA-RNTI and has decoded a RAR Media Access Control Protocol Data Unit (RAR MAC PDU) to get a random access preamble identifier (RAPID) corresponding to the sent sequence, it is considered that the RAR has been successfully received.

Upon the RAR is successfully received, the terminal can only start transmitting the Msg3 at least after NT,1+NT,2+L2, where NT,1 is the shortest processing time between a time when the terminal receives downlink data and a time when the terminal sends an uplink feedback, NT,2 is the shortest processing time between a time when the terminal receives downlink control and a time when the terminal sends uplink data, and L2 is a processing latency of a MAC layer. For example, L2 is 0.5ms in the related art.

The subcarrier spacing for the Msg3 transmission is configured by a higher layer, and because the Msg3 is carried and transmitted by a Physical Uplink Shared Channel (PUSCH), the pre-coding transmission mode may be used during transmission, so the higher layer may also configure the transmission mode of the Msg3. The terminal always sends the random access sequence and the Msg3 on the same carrier. The configuration of transmission resources of the Msg3 may be contained in the RAR. After receiving scheduling information of the RAR in the slot n, the terminal sends the Msg3 in the slot (n+k2+△), where k2 is a network-configured time interval between the time when the terminal receives the uplink scheduling and the time when the uplink transmission is actually performed, △ is an additional delay of the scheduling of the PUSCH by the PRR, which is related to the subcarrier spacing of the PUSCH and is usually a fixed value. The terminal sends a Common Control Channel Service Data Unit (CCCH SDU), such as RRCSetupRequest, on the Msg3. The CCCH SDU contains a contention resolution identity.

After sending the Msg3, the terminal has sent its unique identity to the network. The network needs to send a certain identity through the Msg4 to designate which terminal has won the contention. Other terminals that have failed the contention need to re-initiate the random access process. From the perspective of the physical layer, after sending the Msg3, the terminal starts monitoring the DCI format 1_0 scrambled by a Temporary Cell-Radio Network Temporary Identity (TC-RNTI) and obtains the contention resolution identity sent on a corresponding Physical Downlink Shared Channel (PDSCH). When the contention resolution identity sent on the PDSCH is same as the contention resolution identity in the sent Msg3, the terminal considers that the random access process is successful and transforms the TC-RNTI into a Cell RNTI (C-RNTI). Subsequently, the terminal that has won the contention sends a Hybrid Automatic Repeat reQuest Acknowledgement (HARQ-ACK) feedback of the Msg4 on a Physical Uplink Control Channel (PUCCH). The time interval between the time when the terminal finishes the reception of the last symbol of the PDSCH of the Msg4 and the time when the terminal sends the first symbol of the HARQ-ACK is at least (NT, 1+0.5) ms.

In the related art, when a terminal wants to access two visible-light base stations at the same time or access a visible-light base station and an RF base station at the same time, the terminal may send two Msg1 (preambles) at two ROs. For the RF base station, it is difficult to determine whether these two preambles come from the same terminal or from different terminals, so the RF base station may send the DCI format 1_0 scrambled by respective RA-RNTIs and corresponding RAR MAC PDUs (with different RA-RNTIs) for the two ROs respectively. After the terminal successfully receives the two RARs, the terminal may obtain two TC-RNTIs and two transmission resources of the Msg3.

In this way, the terminal may choose to send two Msg3, which carry the same content, i.e., the contention resolution identity, may receive two Msg4 and then send corresponding HARQ-ACK feedbacks for the two Msg4 respectively, as illustrated in FIG. 4. However this may cause serious waste of transmission resources. If the terminal chooses to send one Msg3, which RAR shall be selected to send the Msg3 corresponding to the selected RAR to inform the RF base station that the two RARs are both successfully received, this is a problem that has not been solved by the related art.

To solve at least one of the above problems, embodiments of the disclosure provide a method for sending a message and a method for receiving a message, to realize simultaneous access to two base stations by using one Msg3 to respond to 2 RARs, thereby reducing the access delay, saving transmission resources, and improving the access success rate.

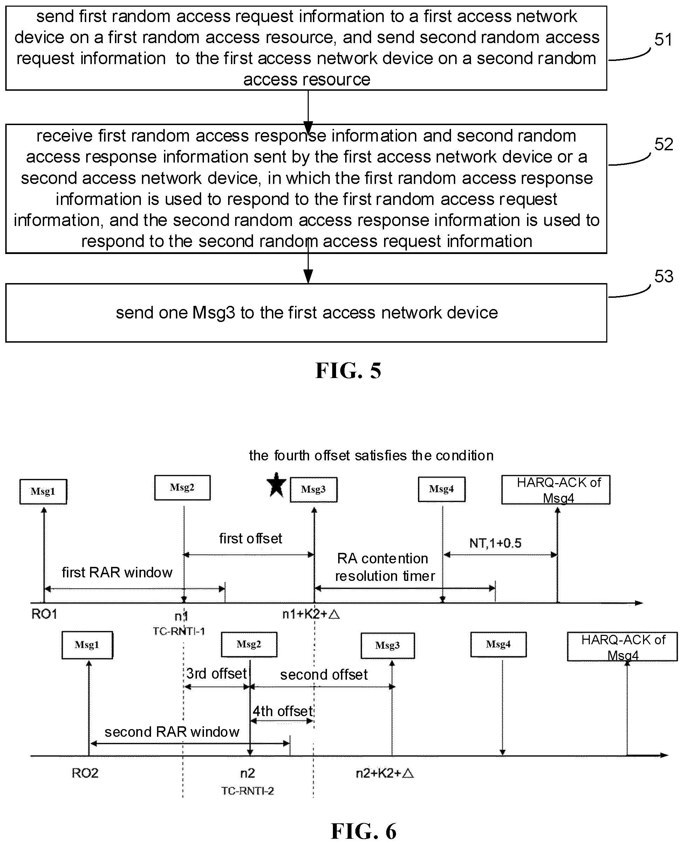

As illustrated in FIG. 5, embodiments of the disclosure provide a method for sending a message. The method is performed by a terminal. The method includes the following.

At step 51, first random access request information is sent to a first access network device on a first random access resource, and second random access request information is sent to the first access network device on a second random access resource.

The first access network device and the second access network device may be the same type or different types of access network devices. For example, the first access network device is a first visible-light base station and the second access network device is a second visible-light base station. Or the first access network device is a visible-light base station and the second access network device is an RF base station, and so on. The terminal sends the random access request information (Msg1) on the two random access resources respectively.

At step 52, first random access response information and second random access response information sent by the first access network device or a second access network device are received, in which the first random access response information is used to respond to the first random access request information, and the second random access response information is used to respond to the second random access request information.

After sending the first random access request information and the second random access request information in step 51, the terminal monitors the random access response information scrambled by corresponding RA-RNTIs within the RAR time windows corresponding to the first random access request information and the second random access request information. For example, the random access response information scrambled by a first RA-RNTI is monitored within a first RAR time window, and the random access response information scrambled by a second RA-RNTI is monitored within a second RAR time window.

Usually, the terminal determines the corresponding RA-RNTI based on a time-frequency location where the Msg1 is sent and searches a common search space of a Type 1-physical downlink control channel (PDCCH) using the corresponding RA-RNTI within the RAR time window. If the terminal has successfully received the DCI format 1-0 scrambled by the corresponding RA-RNTI and decoded the RAR to get the RAPID corresponding to the sent sequence and the corresponding uplink schedule resources, the terminal may determine the transmission resources of the subsequent Msg3 of the random access. If the terminal does not successfully receive the DCI format 1-0 scrambled by the corresponding RA-RNTI, or the terminal does not successfully decode the RAR to get the corresponding RAPID, it is considered that the random access have failed and retransmission of the Msg1 is triggered.

In addition, the terminal may receive the first random access response information and the second random access response information from the first access network device, or may receive the first random access response information and the second random access response information from the second access network device. For example, if the first access network device is a RF base station and the second access network device is a visible-light base station, the RF base station may send the above-described first random access response information and second random access response information to the terminal, or the first random access response information and second random access response information may be sent to the terminal via the visible-light base station.

At step 53, one third message (Msg3) of the random access is sent to the first access network device, in which the Msg3 corresponds to the first random access response information and the second random access response information.

After receiving the above first random access response information and the second random access response information, the terminal sends only one Msg3 to the first access network device, instead of sending two Msg3, which may reduce the number of Msg3 to be sent, the number of Msg4 and the number of HARQ ACKs (HARQ-ACK), thereby reducing the consumption of transmission resources and improving the access efficiency of the terminal.

In some embodiments, the Msg3 sent in step 53 above may be referred to as a target Msg3, which corresponds to the first random access response information and the second random access response information.

In detail, the Msg3 sent in step 53 may be a first Msg3 or a second Msg3. The first Msg3 is an Msg3 sent on a third time-domain resource, scrambled by a first RNTI, and carrying a contention resolution identity and a second RNTI. The second Msg3 is an Msg3 sent on a fourth time-domain resource, scrambled by the second RNTI, and carrying a contention resolution identity and the first RNTI. The third time-domain resource and the first RNTI are indicated by the first random access response information, the third time-domain resource is a time-domain resource for sending the Msg3 and the first RNTI is a TC-RNTI. The fourth time-domain resource and the second RNTI are indicated by the second random access response information, the fourth time-domain resource is a time-domain resource for sending the Msg3, and the second RNTI is a TC-RNTI.

For example, the terminal receives the first random access response information RAR1 (i.e., a first Msg2) on a first time-domain resource (e.g., a slot) n1 within a first time window (i.e., RAR time window). The first random access response information instructs the terminal to send a first Msg3 scrambled by a first RNTI on a third time-domain resource (n1+K2+Δ). The offset (K2+Δ) between the first time-domain resource and the third time-domain resource is referred to as a first offset, which is a positive value greater than or equal to 0.

The terminal receives the second random access response information RAR2 (i.e., a second Msg2) on a second time-domain resource n2 within a second time window (i.e., RAR time window). The second random access response information instructs the terminal to send a second Msg3 scrambled by a second RNTI on a fourth time-domain resource (n2+K2+Δ). The offset (K2 + Δ) between the second time-domain resource and the fourth time-domain resource is referred to as a second offset, which is a positive value greater than or equal to 0.

The offset between the first time-domain resource and the second time-domain resource is referred to as a third offset, which is a positive value greater than or equal to 0.

In some optional embodiments, in an event that the first time-domain resource on which the terminal receives the first random access response information is not later than the second time-domain resource on which the terminal receives the second random access response information, the step 53 of sending the Msg3 includes:
1) in response to the third time-domain resource not being later than the fourth time-domain resource and a fourth offset being greater than or equal to a first threshold, sending the first Msg3 scrambled by the first RNTI on the third time-domain resource;
2) in response to the third time-domain resource not being later than the fourth time-domain resource and the fourth offset being less than the first threshold, sending the second Msg3 scrambled by the second RNTI on the fourth time-domain resource;
3) in response to the third time-domain resource being later than the fourth time-domain resource, sending the second Msg3 scrambled by the second RNTI on the fourth time-domain resource;
in which the fourth offset is equal to a difference between a first offset and a third offset, the first offset is an offset between the first time-domain resource and the third time-domain resource, the third offset is an offset between the first time-domain resource and the second time-domain resource, and each offset is greater than or equal to 0.

The first threshold is a sum of a first time, a second time and a third time, the first time is a shortest processing time between a time when the terminal receives downlink data and a time when the terminal sends feedback information of a downlink time, the second time is a shortest processing time between a time when the terminal receives downlink control information and a time when the terminal sends uplink data scheduled by the downlink control information, and the third time is a data processing delay of a MAC layer of the terminal.

The method for selecting the first Msg3 or the second Msg3 will be described below in combination with FIG. 6 to FIG. 8. In the following description, the smaller the index of a time-domain resource, the earlier the time corresponding to the time-domain resource. That is, between two time-domain resources, the time corresponding to the time-domain resource with a smaller index is earlier than the time corresponding to the time-domain resource with the larger index.

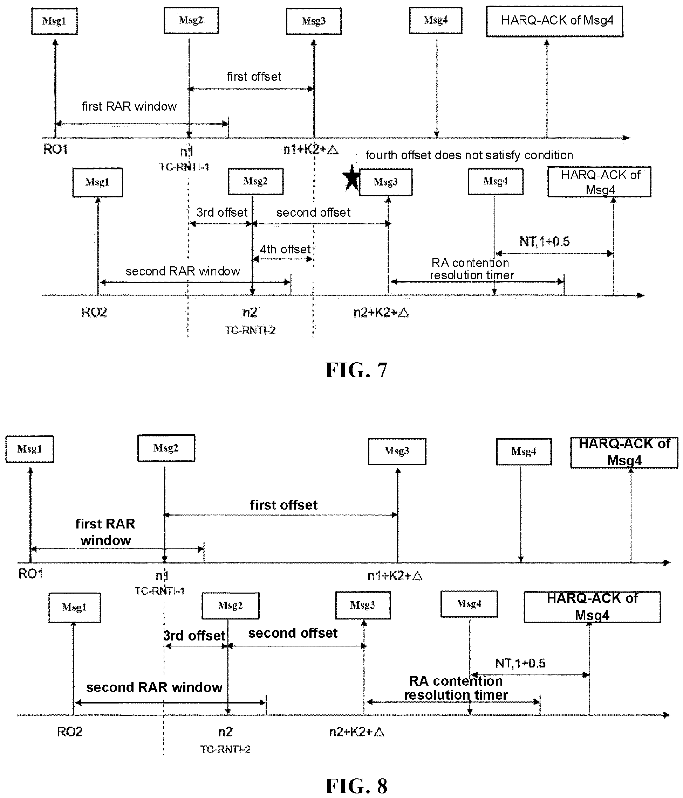

Assuming that the index n1 of the first time-domain resource is smaller than the index n2 of the second time domain resource, if the first random access response information (RAR1) and the second random access response information (RAR2) have been received successfully by the terminal, the third time-domain resource (n1+K2+Δ) is compared with the fourth time-domain resource (n2+K2+Δ).
A) If (n1+K2+Δ) is less than or equal to (n2+K2+Δ), the terminal sends an Msg3 to respond to the first received RAR, and then performs the following steps A1 to A4.
   A1) The terminal calculates a fourth offset between the second time-domain resource and the third time-domain resource. The fourth offset is obtained by subtracting the third offset from the first offset.
   A2) The terminal determines whether the fourth offset is greater than or equal to the first threshold, where the first threshold is equal to NT,1+NT,2+L2. When the fourth offset is greater than or equal to the first threshold, the step A3 is performed. When the fourth offset is less than the first threshold, the step A4 is performed.
   A3) The terminal sends the first Msg3 scrambled by a first RNTI (TC-RNTI-1) on the third time-domain resource, as illustrated in FIG. 6. That is, the terminal sends an Msg3 corresponding to the first random access response, where the contents of the Msg3 contains a contention resolution identity and the second RNTI (TC-RNTI-2).
   A4) The terminal sends the second Msg3 scrambled by the second RNTI (TC-RNTI-2) on the fourth time-domain resource, as illustrated in FIG. 7. That is, the terminal sends an Msg3 corresponding to a second random access response, where the contents of the Msg3 contain a contention resolution identity and the first RNTI (TC-RNTI-1).
B) If (n1+K2+Δ) is greater than (n2+K2+Δ), the terminal sends an Msg3 to respond to the RAR that is received later. In this case, the terminal sends the second Msg3 scrambled by the second RNTI (TC-RNTI-2) on the fourth time-domain resource, as illustrated in FIG. 8. That is, the terminal sends an Msg3 corresponding to the second random access response, where the contents of the Msg3 contain a contention resolution identity and the first RNTI (TC-RNTI-1).

Due to reciprocity, in an event that the first time-domain resource on which the terminal receives the first random access response information is later than the second time-domain resource on which the terminal receives the second random access response information, the specific implementation of sending one Msg3 at step 53 may be referred to the above implementations.

In this way, by sending one Msg3 (e.g., the first Msg3) carrying the RNTI corresponding to another Msg3 (e.g., the second RNTI corresponding to the second Msg3), the terminal may informs the first access network device that the first random access response information and the second random access response information have been successfully received and the subsequent random access process may be continued.

In some optional embodiments, after sending one first Msg3 at step 53, the terminal may also receive a first Msg4, scrambled by the first RNTI, sent by the first access network device or the second access network device. After sending the second Msg3 at step 53, the terminal may also receive a second Msg4, scrambled by the second RNTI, sent by the first access network device or the second access network device.

Further, after successfully receiving the first Msg4, the terminal may also feed back corresponding HARQ-ACK information for the first Msg4. After successfully receiving the second Msg4, the terminal may also feed back corresponding HARQ-ACK information for the second Msg4.

Through the above steps, according to embodiments of the disclosure, when two random access response information are received, only one Msg3 needs to be fed back to realize the simultaneous access of the terminal to two access network devices, which reduces the transmission resource overhead required for information transmission, reduces the processing resource overhead of the terminal for sending and processing messages, reduces the access delay, and improves the access efficiency.

In addition, in embodiments of the disclosure, after sending the two random access request information at step 51, it is possible that only response information corresponding to one of the random access requests is received. For example, only the first random access response information or only the second random access response information is received. In this case, the terminal may perform the following.
1) In the event that the terminal only receives the first random access response information, the terminal sends a third Msg3 scrambled by the first RNTI on the third time-domain resource, in which the third Msg3 carries a corresponding contention resolution identity, and the terminal receives a third Msg4, scrambled by the first RNTI, sent by the first access network device or the second access network device, to continue the random access process corresponding to the first random access request.
2) In the event that the terminal only receives the second random access response information, the terminal sends a fourth Msg3 scrambled by the second RNTI on the fourth time-domain resource, in which the fourth Msg3 carries a corresponding contention resolution identity, and the terminal receives a fourth Msg4, scrambled by the second RNTI, sent by the first access network device or the second access network device, to continue the corresponding random access process corresponding to the second random access request.

If the terminal does not receive the first random access response information or the second random access response information after sending two random access request information at step 51, then the terminal may re-send the Msg1 on the first random access resource and the second random access resource (i.e., the terminal re-send the random access request information) to re-initiate the access.

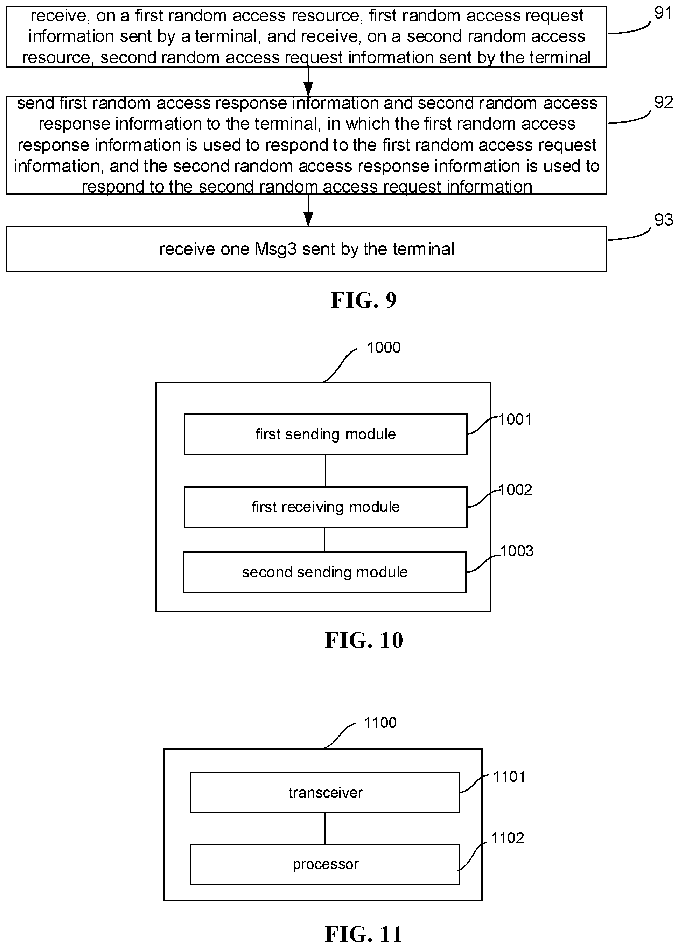

As illustrated in FIG. 9, embodiments of the disclosure provide a method for receiving a message. The method is performed by a first access network device. The method includes the following.

At step 91, first random access request information sent by a terminal is received on a first random access resource, and second random access request information sent by the terminal is received on a second random access resource.

The first access network device may be an RF base station or a visible-light base station.

At step 92, first random access response information and second random access response information are sent to the terminal, in which the first random access response information is used to respond to the first random access request information, and the second random access response information is used to respond to the second random access request information.

The first access network device may send the first random access response information and the second random access response information directly to the terminal, or send the first random access response information and the second random access response information to the terminal through the second access network device.

At step 93, one Msg3 sent by the terminal is received, in which the Msg3 corresponds to the first random access response information and the second random access response information.

The Msg3 received at step 93 may be referred to as a target Msg3, which corresponds to the first random access response information and the second random access response information. In detail, the target Msg3 may be a first Msg3 or a second Msg3. The first Msg3 is an Msg3 sent on a third time-domain resource, scrambled by a first RNTI, and carrying a contention resolution identity and a second RNTI. The second Msg3 is an Msg3 sent on a fourth time-domain resource, scrambled by the second RNTI, and carrying a contention resolution identity and the first RNTI. The third time-domain resource and the first RNTI are indicated by the first random access response information, the third time-domain resource is a time-domain resource for sending the Msg3, and the first RNTI is a TC-RNTI. The fourth time-domain resource and the second RNTI are indicated by the second random access response information, the fourth time-domain resource is a time-domain resource for sending the Msg3, and the second RNTI is a TC-RNTI.

Through the above steps, in embodiments of the disclosure, the first access network device only needs to receive one Msg3 to realize the access of the terminal to the two access network devices, thereby reducing the consumption of transmission resources and improving the access efficiency of the terminal.

After receiving one Msg3 sent by the terminal, the first access network device may send one Msg4 to the terminal. In detail, the first access network device may directly send the Msg4 to the terminal, or may send the Msg4 to the terminal through the second access network device.

In the case where the Msg3 received at step 93 is the first Msg3, the first access network device sends a first Msg4 scrambled by a first RNTI to the terminal. In the case where the Msg3 received at step 93 is the second Msg3, the first access network device sends a second Msg4 scrambled by a second RNTI to the terminal.

In some cases, the terminal may successfully receive one of the two random access responses sent at step 92, and then the terminal sends a third Msg3 or a fourth Msg3 for the received random access response. After step 92, following steps may be included to realize that the terminal accesses one access network device:
receiving by the first access network device a third Msg3, scrambled by the first RNTI, sent on the third time-domain resource by the terminal, in which the third Msg3 carries a contention resolution identity; and sending a third Msg4 scrambled by the first RNTI to the terminal; or
receiving by the first access network device a fourth Msg3, scrambled by the second RNTI, sent on the fourth time-domain resource by the terminal, in which the fourth Msg3 carries a contention resolution identity; and sending a fourth Msg4 scrambled by the second RNTI to the terminal.

Various methods according to embodiments of the disclosure are described above. Apparatuses or devices for implementing the above methods will be further provided below.

As illustrated in FIG. 10, embodiments of the disclosure provide a terminal 100. The terminal includes: a first sending module 1001; a first receiving module 1002; and a second sending module 1003.

The first sending module 1001 is configured to send first random access request information to a first access network device on a first random access resource, and send second random access request information to the first access network device on a second random access resource.

The first receiving module 1002 is configured to receive first random access response information and second random access response information sent by the first access network device or a second access network device, in which the first random access response information is used to respond to the first random access request information, and the second random access response information is used to respond to the second random access request information.

The second sending module 1003 is configured to send one Msg3 to the first access network device, in which the Msg3 corresponds to the first random access response information and the second random access response information.

In some optional embodiments, the Msg3 is a first Msg3 or a second Msg3. The first Msg3 is an Msg3 sent on a third time-domain resource, scrambled by a first RNTI, and carrying a contention resolution identity and a second RNTI. The second Msg3 is an Msg3 sent on a fourth time-domain resource, scrambled by the second RNTI, and carrying a contention resolution identity and the first RNTI. The third time-domain resource and the first RNTI are indicated by the first random access response information, the third time-domain resource is a time-domain resource for sending the Msg3, and the first RNTI is a TC-RNTI. The fourth time-domain resource and the second RNTI are indicated by the second random access response information, the fourth time-domain resource is a time-domain resource for sending the Msg3, and the second RNTI is a TC-RNTI.

In some optional embodiments, the second sending module 1003 is configured to, in the event that the first time-domain resource on which the terminal receives the first random access response information is not later than a second time-domain resource on which the terminal receives the second random access response information, send the first Msg3 scrambled by the first RNTI on the third time-domain resource in response to the third time-domain resource not being later than the fourth time-domain resource and a fourth offset being greater than or equal to a first threshold; send the second Msg3 scrambled by the second RNTI on the fourth time-domain resource in response to the third time-domain resource not being later than the fourth time-domain resource and the fourth offset being less than the first threshold; and send the second Msg3 scrambled by the second RNTI on the fourth time-domain resource in response to the third time-domain resource being later than the fourth time-domain resource; in which the fourth offset is equal to a difference between a first offset and a third offset, the first offset is an offset between the first time-domain resource and the third time-domain resource, the third offset is an offset between the first time-domain resource and the second time-domain resource, and each offset is greater than or equal to 0.

In some optional embodiments, the first threshold is a sum of a first time, a second time and a third time. The first time is a shortest processing time between a time when the terminal receives downlink data and a time when the terminal sends feedback information of a downlink time, the second time is a shortest processing time between the time when the terminal receives downlink control information and the time when the terminal sends uplink data scheduled by the downlink control information, and the third time is a data processing delay of a MAC layer of the terminal.

In some optional embodiments, the terminal further includes: a second receiving module configured to, after sending the first Msg3, receive a first Msg4, scrambled by the first RNTI, sent by the first access network device or the second access network device; or
a third receiving module configured to, after sending the second Msg3, receive a second Msg4, scrambled by the second RNTI, sent by the first access network device or the second access network device.

In some optional embodiments, the terminal further includes a first processing module configured to, after sending the first random access request information and the second random access request information, if the first receiving module receives only the first random access response information or the second random access response information, send a third Msg3 scrambled by the first RNTI on the third time-domain resource in response to receiving only the first random access response information, in which the third Msg3 carries a contention resolution identity, and receive a third Msg4, scrambled by the first RNTI, sent by the first access network device or the second access network device; and send a fourth Msg3 scrambled by the second RNTI on the fourth time-domain resource in response to receiving only the second random access response information, in which the fourth Msg3 carries a contention resolution identity, and receive a fourth Msg4, scrambled by the second RNTI, sent by the first access network device or the second access network device.

In some optional embodiments, the terminal further includes a second processing module configured to, after sending the first random access request information and the second random access request information, if the first receiving module does not receive the first random access response information or the second random access response information, re-send the Msg1 on the first random access resource and the second random access resource.

It is noteworthy that the device in embodiments of FIG. 10 corresponds to the method illustrated in FIG. 5 above, and the implementations in each above embodiment are applicable to the device in embodiments of FIG. 10, and the same technical effect may be achieved. The above device according to embodiments of the disclosure may realize all the steps of the methods in above method embodiments and achieve the same technical effect. The contents of embodiments of FIG. 10 same as those in method embodiments and the beneficial effects will not be specifically elaborated herein.

As illustrated in FIG. 11, embodiments of the disclosure provide a terminal 1100. The terminal 1100 includes: a transceiver 1101 and a processor 1102.

The transceiver 1101 is configured to send first random access request information to a first access network device on a first random access resource, and send second random access request information to the first access network device on a second random access resource; receive first random access response information and second random access response information sent by the first access network device or a second access network device; in which the first random access response information is used to respond to the first random access request information, and the second random access response information is used to respond to the second random access request information.

The processor 1102 is configured to send one Msg3 to the first access network device, in which the Msg3 corresponds to the first random access response information and the second random access response information.

In some optional embodiments, the Msg3 is a first Msg3 or a second Msg3. The first Msg3 is an Msg3 sent on a third time-domain resource, scrambled by a first RNTI, and carrying a contention resolution identity and a second RNTI. The second Msg3 is an Msg3 sent on a fourth time-domain resource, scrambled by the second RNTI, and carrying a contention resolution identity and the first RNTI. The third time-domain resource and the first RNTI are indicated by the first random access response information, the third time-domain resource is a time-domain resource for sending the Msg3, and the first RNTI is a TC-RNTI. The fourth time-domain resource and the second RNTI are indicated by the second random access response information, the fourth time-domain resource is a time-domain resource for sending the Msg3, and the second RNTI is a TC-RNTI.

In some optional embodiments, the processor is further configured to, in an event that the first time-domain resource on which the transceiver 1101 receives the first random access response information is not later than a second time-domain resource on which the transceiver 1101 receives the second random access response information, send the first Msg3 scrambled by the first RNTI on the third time-domain resource in response to the third time-domain resource not being later than the fourth time-domain resource and a fourth offset being greater than or equal to a first threshold; send the second Msg3 scrambled by the second RNTI on the fourth time-domain resource in response to the third time-domain resource not being later than the fourth time-domain resource and the fourth offset being less than the first threshold; and send the second Msg3 scrambled by the second RNTI on the fourth time-domain resource in response to the third time-domain resource being later than the fourth time-domain resource; in which the fourth offset is equal to a difference between a first offset and a third offset, the first offset is an offset between the first time-domain resource and the third time-domain resource, the third offset is an offset between the first time-domain resource and the second time-domain resource, and each offset is greater than or equal to 0.

In some optional embodiments, the first threshold is a sum of a first time, a second time and a third time. The first time is a shortest processing time between a time when the terminal receives downlink data and a time when the terminal sends feedback information of a downlink time, the second time is a shortest processing time between a time when the terminal receives downlink control information and a time when the terminal sends uplink data scheduled by the downlink control information, and the third time is a data processing delay of a MAC layer of the terminal.

In some optional embodiments, the transceiver is further configured to: after sending the first Msg3, receive a first Msg4, scrambled by the first RNTI, sent by the first access network device or the second access network device; or after sending the second Msg3, receive a second Msg4, scrambled by the second RNTI, sent by the first access network device or the second access network device.

In some optional embodiments, the processor is further configured to, after sending the first random access request information and the second random access request information, if the transceiver 1101 receives only the first random access response information or the second random access response information, send a third Msg3 scrambled by the first RNTI on the third time-domain resource in response to receiving only the first random access response information, in which the third Msg3 carries a contention resolution identity, and receive a third Msg4, scrambled by the first RNTI, sent by the first access network device or the second access network device; send a fourth Msg3 scrambled by the second RNTI on the fourth time-domain resource in response to receiving only the second random access response information, in which the fourth Msg3 carries a contention resolution identity, and receive a fourth Msg4, scrambled by the second RNTI, sent by the first access network device or the second access network device.

In some optional embodiments, the processor is further configured to: after the transceiver sends the first random access request information and the second random access request information, re-send the Msg1 on the first random access resource and the second random access resource if the transceiver does not receive the first random access response information or the second random access response information.

It is noteworthy that that the device in embodiments of FIG. 11 corresponds to the method illustrated in FIG. 5 above, and the implementations in each above embodiment are applicable to the device in embodiments of FIG. 11, and the same technical effect may be achieved. The above device according to embodiments of the disclosure may realize all the steps of the methods in above method embodiments and achieve the same technical effect. The contents of embodiments of FIG. 11 same as those in method embodiments and the beneficial effects will not be specifically elaborated herein.

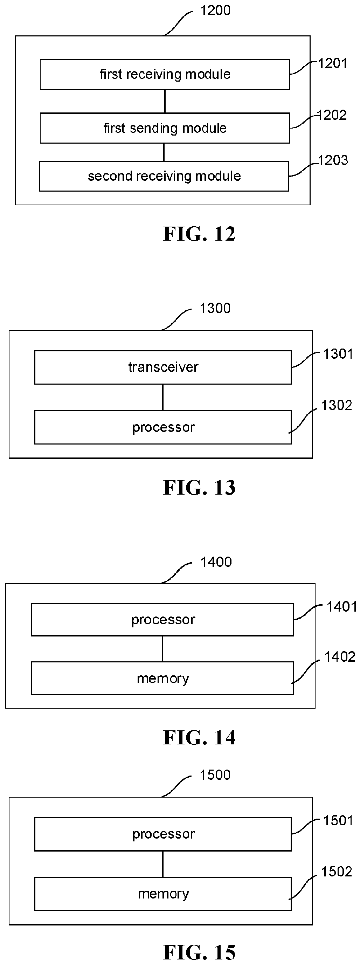

As illustrated in FIG. 12, embodiments of the disclosure provide an access network device 1200. The access network device is a first access network device. The device includes a first receiving module 1201, a first sending module 1202, and a second receiving module 1203.

The first receiving module 1201 is configured to receive, on a first random access resource, first random access request information sent by a terminal, and receive, on a second random access resource, second random access request information sent by the terminal.

The first sending module 1202 is configured to send first random access response information and second random access response information to the terminal, in which the first random access response information is used to respond to the first random access request information, and the second random access response information is used to respond to the second random access request information.

The second receiving module 1203 is configured to receive one Msg3 sent by the terminal, in which the Msg3 corresponds to the first random access response information and the second random access response information.

In some optional embodiments, the Msg3 is a first Msg3 or a second Msg3. The first Msg3 is an Msg3 sent on a third time-domain resource, scrambled by a first RNTI, and carrying a contention resolution identity and a second RNTI. The second Msg3 is an Msg3 sent on a fourth time-domain resource, scrambled by the second RNTI, and carrying a contention resolution identity and the first RNTI. The third time-domain resource and the first RNTI are indicated by the first random access response information the third time-domain resource is a time-domain resource for sending the Msg3, and the first RNTI is a TC-RNTI. The fourth time-domain resource and the second RNTI are indicated by the second random access response information, the fourth time-domain resource is a time-domain resource for sending the Msg3, and the second RNTI is a TC-RNTI.

In some optional embodiments, the first sending module is further configured to: send the first random access response information and the second random access response information directly to the terminal; or send the first random access response information and the second random access response information to the terminal via a second access network device.

In some optional embodiments, the access network device further includes: a second sending module configured to, after receiving the Msg3 from the terminal, send one Msg4 to the terminal.

In some optional embodiments, the second sending module is further configured to: send a first Msg4 scrambled by the first RNTI to the terminal in response to the Msg3 being the first Msg3; or send a second Msg4 scrambled by the second RNTI to the terminal in response to the Msg3 being the second Msg3.

In some optional embodiments, the access network device further includes: a first processing module configured to, after sending the first random access response information and the second random access response information, receive a third Msg3, scrambled by the first RNTI, sent on the third time-domain resource by the terminal, in which the third Msg3 carries a contention resolution identity, and send a third Msg4 scrambled by the first RNTI to the terminal; or receive a fourth Msg3, scrambled by the second RNTI, sent on the fourth time-domain resource by the terminal, in which the fourth Msg3 carries a contention resolution identity, and send a fourth Msg4 scrambled by the second RNTI to the terminal.

It is noteworthy that that the device in embodiments of FIG. 12 corresponds to the method illustrated in FIG. 9 above, and the implementations in each above embodiment are applicable to the device in embodiments of FIG. 12, and the same technical effect may be achieved. The above device according to embodiments of the disclosure may realize all the steps of the methods in above method embodiments and achieve the same technical effect. The contents of embodiments of FIG. 12 same as those in method embodiments and the beneficial effects will not be specifically elaborated herein..

As illustrated in FIG. 13, embodiments of the disclosure provide an access network device 1300. The access network device is a first access network device. The device includes: a transceiver 1301 and a processor 1302.

The transceiver 1301 is configured to receive, on a first random access resource, first random access request information sent by a terminal, receive, on a second random access resource, second random access request information sent by the terminal, and send first random access response information and second random access response information to the terminal, in which the first random access response information is used to respond to the first random access request information, and the second random access response information is used to respond to the second random access request information.

The processor 1302 is configured to receive one Msg3 sent by the terminal, in which the Msg3 corresponds to the first random access response information and the second random access response information.

In some optional embodiments, the Msg3 is a first Msg3 or a second Msg3. The first Msg3 is an Msg3 sent on a third time-domain resource, scrambled by a first RNTI, and carrying a contention resolution identity and a second RNTI. The second Msg3 is an Msg3 sent on a fourth time-domain resource, scrambled by the second RNTI, and carrying a contention resolution identity and the first RNTI. The third time-domain resource and the first RNTI are indicated by the first random access response information, the third time-domain resource is a time-domain resource for sending the Msg3, and the first RNTI is a TC-RNTI. The fourth time-domain resource and the second RNTI are indicated by the second random access response information, the fourth time-domain resource is a time-domain resource for sending the Msg3, and the second RNTI is a TC-RNTI.

In some optional embodiments, the transceiver is further configured to: send the first random access response information and the second random access response information directly to the terminal; or send the first random access response information and the second random access response information to the terminal via a second access network device.

In some optional embodiments, the processor is further configured to send one Msg4 to the terminal after receiving the Msg3 from the terminal.

In some optional embodiments, the processor is configured to: send a first Msg4 scrambled by the first RNTI to the terminal in response to the Msg3 being the first Msg3; or send a second Msg4 scrambled by the second RNTI to the terminal in response to the Msg3 being the second Msg3.

In some optional embodiments, the processor is configured to: after sending the first random access response information and the second random access response information, receive a third Msg3, scrambled by the first RNTI, sent on the third time-domain resource by the terminal, in which the third Msg3 carries a contention resolution identity, and send a third Msg4 scrambled by the first RNTI to the terminal; or receive a fourth Msg3, scrambled by the second RNTI, sent on the fourth time-domain resource by the terminal, in which the fourth Msg3 carries a contention resolution identity, and send a fourth Msg4 scrambled by the second RNTI to the terminal.

It is noteworthy that that the device in embodiments of FIG. 13 corresponds to the method illustrated in FIG. 9 above, and the implementations in each above embodiment are applicable to the device in embodiments of FIG. 13, and the same technical effect may be achieved. The above device according to embodiments of the disclosure may realize all the steps of the methods in above method embodiments and achieve the same technical effect. The contents of embodiments of FIG. 13 same as those in method embodiments and the beneficial effects will not be specifically elaborated herein.

As illustrated in FIG. 14, embodiments of the disclosure provide a terminal 1400. The terminal 100 includes a processor 1401, a memory 1402 and a computer program stored on the memory 1402 and executable by the processor 1401. When the computer program is executed by the processor 1401, each process of above embodiments of the methods for sending a message executed by the terminal may be realized and the same technical effect may be achieved, which will not be repeated here to avoid repetition.

As illustrated in FIG. 15, embodiments of the disclosure provide an access network device 15. The access network device 15 includes a processor 1501, a memory 1502 and a computer program stored on the memory 1502 and executable by the processor 1501. When the computer program is executed by the processor 1501, each process of above embodiments of the methods for receiving a message executed by the first access network device may be realized and the same technical effect may be achieved, which will not be repeated here to avoid repetition.

Embodiments of the disclosure also provide a computer-readable storage medium having a computer program stored thereon. When the computer program is executed by a processor, various processes of above embodiments of the methods for sending a message and the methods for receiving a message may be implemented, and the same technical effect may be achieved, which will not be repeated herein to avoid repetition. The computer-readable storage medium may be a read-only memory (ROM), a random access memory (RAM), a disk or a CD-ROM.

The features disclosed in the method or device embodiments according to the disclosure may be arbitrarily combined without conflict to obtain new method or device embodiments.

It is noteworthy that, in the disclosure, the terms "comprise", "include" or any other variations thereof are meant to cover non-exclusive including, so that the process, method, article or device comprising a series of elements not only include those elements, but also include other elements that are not explicitly listed or also comprise the inherent elements of the process, method, article or device. In the case that there are no more restrictions, an element qualified by the statement "comprises a... " does not exclude the presence of additional identical elements in the process, method, article or device that includes the said element.

Through the description of the above implementations, those skilled in the art may clearly understand that above method embodiments may be implemented by means of software and a necessary general hardware platform, or by hardware, but in many cases the former is a better implementation. Based on this understanding, the technical solution of the disclosure, or the part that contributes to the related art, may be embodied in the form of a software product. The computer software product is stored in a storage medium (such as a ROM/RAM, a disk, or a CD), and includes a number of instructions for causing a terminal (e.g., a cell phone, a computer, a server, an air conditioner, or a network device) to execute the methods described in the embodiments of the disclosure.

Embodiments of the disclosure are described above in combination with the accompanying drawings, but the disclosure is not limited to the above-mentioned implementations. The above-mentioned specific implementations are merely illustrative and not limiting. Under the inspiration of the disclosure, there are many other forms that may be made by those skilled in the art without departing from the purposes and the protection scope of the claims of the disclosure, which all fall within the protection of the disclosure.

## Claims

1. A method for sending a message, performed by a terminal, comprising:
sending first random access request information to a first access network device on a first random access resource, and sending second random access request information to the first access network device on a second random access resource;
receiving first random access response information and second random access response information sent by the first access network device or a second access network device, wherein the first random access response information is used to respond to the first random access request information, and the second random access response information is used to respond to the second random access request information; and
sending one third message (Msg3) of random access to the first access network device, wherein the Msg3 corresponds to the first random access response information and the second random access response information.

2. The method of claim 1, wherein the Msg3 is a first Msg3 or a second Msg3,
the first Msg3 is an Msg3 sent on a third time-domain resource, scrambled by a first Radio Network Temporary Identity (RNTI), and carrying a contention resolution identity and a second RNTI; the second Msg3 is an Msg3 sent on a fourth time-domain resource, scrambled by the second RNTI, and carrying a contention resolution identity and the first RNTI; the third time-domain resource and the first RNTI are indicated by the first random access response information, the third time-domain resource is a time-domain resource for sending the Msg3, and the first RNTI is a Temporary Cell-RNTI (TC-RNTI); and the fourth time-domain resource and the second RNTI are indicated by the second random access response information, the fourth time-domain resource is a time-domain resource for sending the Msg3, and the second RNTI is a TC-RNTI.

3. The method of claim 2, wherein in an event that a first time-domain resource on which the terminal receives the first random access response information is not later than a second time-domain resource on which the terminal receives the second random access response information, sending one Msg3 to the first access network device comprises:
in response to the third time-domain resource not being later than the fourth time-domain resource and a fourth offset being greater than or equal to a first threshold, sending a first Msg3 scrambled by the first RNTI on the third time-domain resource;
in response to the third time-domain resource not being later than the fourth time-domain resource and the fourth offset being less than the first threshold, sending a second Msg3 scrambled by the second RNTI on the fourth time-domain resource; and
in response to the third time-domain resource being later than the fourth time-domain resource, sending the second Msg3 scrambled by the second RNTI on the fourth time-domain resource;
wherein the fourth offset is equal to a difference between a first offset and a third offset, the first offset is an offset between the first time-domain resource and the third time-domain resource, the third offset is an offset between the first time-domain resource and the second time-domain resource, and each offset is greater than or equal to 0.

4. The method of claim 3, wherein the first threshold is a sum of a first time, a second time and a third time, the first time is a shortest processing time between a time when the terminal receives downlink data and a time when the terminal sends feedback information of a downlink time, the second time is a shortest processing time between a time when the terminal receives downlink control information and a time when the terminal sends uplink data scheduled by the downlink control information, and the third time is a data processing delay of a Media Access Control (MAC) layer of the terminal.

5. The method of claim 3, wherein after sending the first Msg3, the method further comprises: receiving a first fourth message (Msg4) of the random access, scrambled by the first RNTI, sent by the first access network device or the second access network device; and
wherein after sending the second Msg3, the method further comprises: receiving a second Msg4, scrambled by the second RNTI, sent by the first access network device or the second access network device.

6. The method of claim 2, wherein after sending the first random access request information and the second random access request information, in an event that the terminal receives only the first random access response information or the second random access response information, the method further comprises:
in response to receiving only the first random access response information, sending a third Msg3 scrambled by the first RNTI on the third time-domain resource, in which the third Msg3 carries a contention resolution identity; and receiving a third fourth message (Msg4) of the random access, scrambled by the first RNTI, sent by the first access network device or the second access network device; and
in response to receiving only the second random access response information, sending a fourth Msg3 scrambled by the second RNTI on the fourth time-domain resource, in which the fourth Msg3 carries a contention resolution identity; and receiving a fourth Msg4, scrambled by the second RNTI, sent by the first access network device or the second access network device.

7. The method of claim 2, wherein after sending the first random access request information and the second random access request information, in an event that the terminal does not receive the first random access response information and the second random access response information, the method further comprises:
re-sending a first message (Msg1) of the random access on the first random access resource and the second random access resource.

8. A method for receiving a message, performed by a first access network device, comprising:
receiving, on a first random access resource, first random access request information sent by a terminal, and receiving, on a second random access resource, second random access request information sent by the terminal;
sending first random access response information and second random access response information to the terminal, wherein the first random access response information is used to respond to the first random access request information, and the second random access response information is used to respond to the second random access request information; and
receiving one third message (Msg3) of random access sent by the terminal, in which the Msg3 corresponds to the first random access response information and the second random access response information.

9. The method of claim 8, wherein the Msg3 is a first Msg3 or a second Msg3,
the first Msg3 is an Msg3 sent on a third time-domain resource, scrambled by a first Radio Network Temporary Identity (RNTI), and carrying a contention resolution identity and a second RNTI; the second Msg3 is an Msg3 sent on a fourth time-domain resource, scrambled by the second RNTI, and carrying a contention resolution identity and the first RNTI; the third time-domain resource and the first RNTI are indicated by the first random access response information, the third time-domain resource is a time-domain resource for sending the Msg3, and the first RNTI is a Temporary Cell-RNTI (TC-RNTI); and the fourth time-domain resource and the second RNTI are indicated by the second random access response information, the fourth time-domain resource is a time-domain resource for sending the Msg3, and the second RNTI is a TC-RNTI.

10. The method of claim 8, wherein sending the first random access response information and the second random access response information to the terminal comprises:
sending the first random access response information and the second random access response information directly to the terminal; or
sending the first random access response information and the second random access response information to the terminal via a second access network device.

11. The method of any one of claims 8 to 10, wherein, after receiving one Msg3 from the terminal, the method further comprises: sending one fourth message (Msg4) of the random access to the terminal.

12. The method of claim 11, wherein sending one Msg4 to the terminal comprises:
in response to the Msg3 being the first Msg3, sending a first Msg4 scrambled by the first RNTI to the terminal; or
in response to the Msg3 being the second Msg3, sending a second Msg4 scrambled by the second RNTI to the terminal.

13. The method of claim 9, wherein after sending the first random access response information and the second random access response information, the method further comprises:
receiving a third Msg3, scrambled by the first RNTI, sent on the third time-domain resource by the terminal, in which the third Msg3 carries a contention resolution identity; and sending a third fourth message (Msg4) of the random access scrambled by the first RNTI to the terminal; or
receiving a fourth Msg3, scrambled by the second RNTI, sent on the fourth time-domain resource by the terminal, in which the fourth Msg3 carries a contention resolution identity; and sending a fourth Msg4 scrambled by the second RNTI to the terminal.

14. A terminal, comprising: a transceiver and a processor,
wherein the transceiver is configured to send first random access request information to a first access network device on a first random access resource, and send second random access request information to the first access network device on a second random access resource; receive first random access response information and second random access response information sent by the first access network device or a second access network device; wherein the first random access response information is used to respond to the first random access request information, and the second random access response information is used to respond to the second random access request information; and
the processor is configured to send one third message (Msg3) of random access to the first access network device, wherein the Msg3 corresponds to the first random access response information and the second random access response information.

15. A terminal, comprising: a processor, a memory and a program stored on the memory and executable by the processor, wherein when the program is executed by the processor, the steps of the method of any one of claims 1 to 7 are implemented.

16. An access network device, wherein the access network device is a first access network device, and the access network device comprises: a transceiver and a processor,
wherein the transceiver is configured to receive, on a first random access resource, first random access request information sent by a terminal, and receive, on a second random access resource, second random access request information sent by the terminal; and
the processor is configured to send first random access response information and second random access response information to the terminal, wherein the first random access response information is used to respond to the first random access request information, and the second random access response information is used to respond to the second random access request information; and receive one third message (Msg3) of random access sent by terminal, wherein the Msg3 corresponds to the first random access response information and the second random access response information.

17. An access network device, comprising: a processor, a memory and a program stored on the memory and executable by the processor, wherein when the program is executed by the processor, the steps of the method of any one of claims 8 to 13 are implemented.

18. A computer-readable storage medium having a computer program stored thereon, wherein when the computer program is executed by the processor, the steps of the method of any one of claims 1 to 7 are implemented or the steps of the method of any one of claims 8 to 13 are implemented.
